# EUROPEAN PATENT APPLICATION

(11) **EP 1 553 315 A1**
(43) Date of publication of application: **13.07.2005**
(21) Application number: 05000104.9
(22) Date of filing: 05.01.2005
(51) Int. Cl.: F16C 19/28, F03D 11/00

(54) **Cylindrical roller bearing and planetary gear assembly utilizing the same**

(30) Priority: 07.01.2004 JP 2004002165
(71) Applicant: NTN CORPORATION, Osaka-shi, Osaka 550-0003 (JP)
(72) Inventor: Nakagawa, Naoki, Kuwana-shi, MIE 511-0811 (JP); Hori, Masaharu, Kuwana-shi, MIE 511-0811 (JP); Yagi, Soichi, Kuwana-shi, MIE 511-0811 (JP)
(74) Representative: Gassner, Wolfgang, Dr.

(57) **Abstract**

There is provided a cylindrical roller bearing (1) which includes an inner race (2), an outer race (3) and first, second and third rows of rollers (4A, 4B and 4C) accommodated within an annular bearing space delimited between the inner and outer races (2 and 3) with the second or intermediate row of the rollers (4B) positioned between the first and third rows of the rollers (4A and 4C). The rollers (4A and 4C) of the first and third rows have respective lengths (L_{A} and L_{C}) greater than the length (L_{B})of the rollers (4B) of the second row.

## Description

### BACKGROUND OF THE INVENTION

### (Field of the Invention)

The present invention relates to a cylindrical roller bearing for use in supporting an element, on which the moment load acts, such as a planetary gear in a planetary gear assembly and also to the planetary gear assembly utilizing such cylindrical roller bearing.

### (Description of the Prior Art)

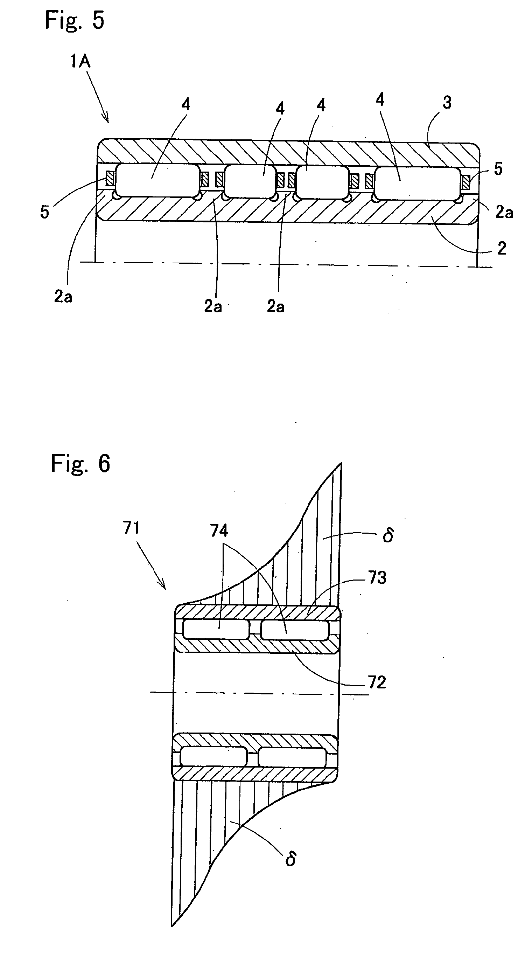

In the general planetary gear assembly, particularly that of a kind used in association with, for example, a speed increaser employed in a wind power generator, such a multi-row cylindrical roller bearing 71 as shown in Fig. 6, for example, is generally largely employed for rotatably supporting a planetary gear. See, for example, the Japanese Laid-open Patent Publication No. 09-088977. The cylindrical roller bearing 71 includes a cylindrical inner race 72, a cylindrical outer race 73 and a plurality of, for example, two, rows of rollers 74 retained by corresponding retainers (not shown in Fig. 6).

Any bearing for the support of the planetary gear is utilized to rotatably mound the planetary gear therethrough on a support shaft carried by a carrier so that the planetary gear can undergo a revolution about an externally threaded sun gear in engagement with the externally threaded sun gear and a ring gear (i.e., an internally threaded sun gear) while at the same time undergoing a rotation about its own axis. As such, an inclined load, that is, a moment load acts on the bearing supporting the planetary gear, as shown by a pattern of distribution of stresses δ in Fig. 6. Particularly where the support shaft for the support of the planetary gear is carried by the carrier in a cantilever fashion, the support shaft tends to tilt and, therefore, inclination of the load acting on the bearing correspondingly increases.

On the other hand, in the event that the moment load of a kind discussed above acts on the cylindrical roller bearing 71, skew tends to occur. The longer the rollers 74, the more considerable this skew. The occurrence of the skew in the cylindrical roller bearing 71 is considered undesirable since it affects the durability of the roller bearing 71.

If the number of rows of the rollers 74 is increased and, at the same time, the length of each of the rollers 74 is decreased, the skew would occur infrequently, but in the event of the moment load acting in the manner described hereinabove, loads acting on opposite ends of the roller bearing 71 increase as shown by the pattern of distribution of stresses δ in Fig. 6 and, accordingly, two of the rows of the rollers 74, which are positioned adjacent the opposite ends of the roller bearing 71 will have an insufficient load bearing capacity.

Also, considering that the planetary gear revolves about the sun gear, while positioned between the sun gear and the ring gear, to transmit the load, it is generally recognized that a relatively large radial load acts on the roller bearing used to support the planetary gear. In order for the cylindrical roller bearing 71 to have an increased load bearing capacity with respect to the radial load acting thereon, it is necessary to increase the total length of the rollers 74 of the opposite rows. Since for a given length of the roller bearing 71 the increase of the number of the rows of the rollers 74 will necessarily result in reduction of the total length of the rollers 74 in order to secure a sufficient space for accommodation of the roller retainers, one for each roller row, for rotatably retaining the rollers 74 and the load bearing capacity of the roller bearing 71 as a whole will consequently decrease.

### SUMMARY OF THE INVENTION

In view of the foregoing, the present invention is intended to provide an improved cylindrical roller bearing as a whole capable of having a sufficient load bearing capacity, in which even when used under a condition in which the moment load acts, the skew will hardly occur and in which a sufficient load bearing capacity of each of opposite rows of rollers can be secured.

Another important object of the present invention is to provide an improved planetary gear assembly utilizing the cylindrical roller bearing of the type referred to above, which is excellent in durability and load bearing capacity.

In order to accomplish these objects of the present invention, a cylindrical roller bearing herein discloses in accordance with one aspect of the present invention includes a cylindrical inner race, a cylindrical outer race and first, second and third rows of rollers accommodated within an annular bearing space delimited between the inner and outer races with the second or intermediate row of the rollers positioned between the first and third rows of the rollers. Each of the rollers of the first and third rows has a length greater than that of each of the rollers of the second row.

According to the present invention, for a given length of the cylindrical roller bearing, the use of the three rows of the rollers can allow each of the rollers of any of the first to third rows to have a length smaller than that in the double rows of rollers. Accordingly, even though the moment load acts, the skew will hardly occur in the triple row cylindrical roller bearing. This leads to prevention of a frictional wear, which would otherwise be brought about by the skew, and, hence, to increase of the durability of the triple row cylindrical roller assembly. Although the use of the relatively short rollers for each row may decrease the load bearing capacity exhibited by each of the first to third rows of the rollers, since the length of each roller of the first and third rows is rendered greater than that of each roller of the second row, the rollers of the first and third rows can have the respective lengths slightly smaller than the length of each roller of the opposite rows in the double row roller bearing and, therefore, each of the first and third rows of the rollers can have a sufficient load bearing capacity even under a condition in which the load on each of the opposite ends of the roller bearing increases with the moment load. Considering that the load acting on the intermediate or second row of the rollers is small, the intermediate row of the rollers will not pose any problem associated with the load bearing capacity.

The use of the triple rows of the rollers in the cylindrical roller bearing according to the present invention allows the roller bearing as a whole to exhibit a sufficient load bearing capacity since reduction in total length of the rollers due to the presence of a gap between the neighboring rows of the rollers, is minimal as compared with the cylindrical roller bearing having four or more rows of the rollers.

In accordance with another aspect of the present invention, there is also provided a planetary gear assembly utilizing the triple row cylindrical roller bearing of the structure discussed above. Specifically, the planetary gear assembly herein disclosed includes an internally or externally threaded sun gear, a carrier rotatable in coaxial relation with the sun gear and having at least one support shaft, and at least one planetary gear rotatably supported by the support shaft and meshed with the sun gear. The triple row cylindrical roller bearing of the present invention is mounted on the support shaft and intervenes between the support shaft and the planetary gear.

Since the planetary gear revolves being meshed with the sun gear, the moment load tends to act on the roller bearing then supporting the planetary gear, and a relatively large additional load acts on the roller bearing for transmission of a drive force. For this reason, the use of the triple row cylindrical roller bearing of the present invention in the planetary gear assembly is effective to minimize the adverse effect of skewing, under the condition in which the moment load acts, allowing not only the first and third rows of the rollers to secure a sufficient load bearing capacity, but also the roller bearing as a whole to exhibit a sufficient load bearing capacity. Hence, the durability of the roller bearing supporting the planetary gear can increase.

In a preferred embodiment of the present invention, the planetary gear assembly of the present invention may form a part or the entirety of a speed increaser used in a wind power generator for increasing the speed of rotation of a windmill and then transmitting the rotation to an electric generator.

As is well known to those skilled in the art, since the wind power generator is generally installed at a nonresidential region and/or at an upland region, the speed increaser is consequently placed in a difficult condition for regular maintenance. Accordingly, the need is generally arisen to render the wind power generator including the speed increaser to be maintenance-free for a substantial length of time. Under these circumstances, the cylindrical roller bearing according to the present invention, which can be utilized to support the planetary gear and has an excellent durability, is believed to meet with this need.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a fragmentary longitudinal sectional view of a cylindrical roller bearing according to a preferred embodiment of the present invention;
Fig. 2 is a fragmentary longitudinal sectional view of a speed increaser employed in the wind power generator, which increaser makes use of the cylindrical roller bearing according to the present invention;
Fig. 3 is a transverse sectional view of a portion of the speed increaser, showing a planetary gear assembly employed therein;
Fig. 4 is a schematic diagram showing the wind power generator;
Fig. 5 is a fragmentary longitudinal sectional view of a cylindrical roller bearing suggested for the purpose of reference; and
Fig. 6 is an explanatory diagram showing the conventional cylindrical roller bearing.

### DETAILED DESCRIPTION OF THE EMBODIMENTS

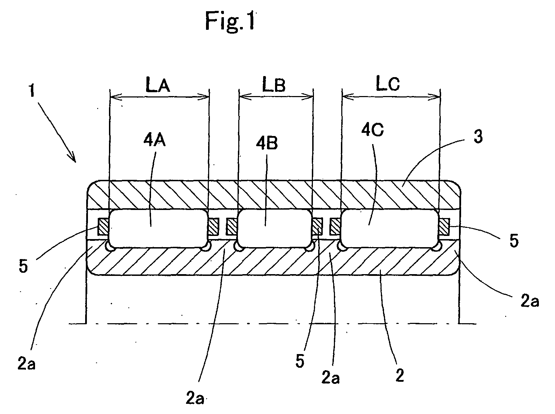

One preferred embodiment of the present invention will now be described with reference to the accompanying drawings. Referring particularly to Fig. 1, a cylindrical roller bearing 1 embodying the present invention includes a cylindrical inner race 2, a cylindrical outer race 3 and triple rows of rollers 4A, 4B and 4C accommodated within an annular bearing space delimited between the inner and outer races 2 and 3, with the second row of the rollers 4B positioned between the first and third rows of the rollers 4A and 4C. Each of the rollers 4A and 4C of the first and third rows has a length L_{A} and L_{C} greater than the length L_{B} of each of the rollers 4B of the second row. It is, however, to be noted that the rollers 4A and 4C of the first and third rows may have the respective lengths L_{A} and L_{C} that are equal to each other such as shown, but may have the respective lengths L_{A} and L_{C} that are different from each other.

The rollers 4A to 4C of each row are rollingly retained by a roller retainer or cage 5 in a manner well known to those skilled in the art. However, the present invention can be equally applied to a full complement roller bearing having no roller retainer or cage 5.

In the illustrated embodiment, the inner race 2 has a radially outwardly protruding collar 2a formed at each of opposite ends of the inner race 2 and, also, at a location between the neighboring rows of the rollers 4A and 4B, 4B and 4C, whereas the outer race 3 is of a collarless design, i.e., has a substantially smooth inner peripheral surface. However, the present invention can be equally applied to a cylindrical roller bearing, in which the collars 2a are formed in only the outer race 3, rather than in the inner race 2 such as shown, or in both of the inner and outer races 2 and 3. Yet, the present invention can be equally applied to a cylindrical roller bearing, in which both of the inner and outer races 2 and 3 have no collar formed therein.

With respect to material for the rollers 4A to 4C, the rollers 4A and 4C of the first and third rows are preferably made of a material higher in durability than that used to form the roller 4B of the intermediate row. By way of example, if a bearing steel such as SUJ is employed as a material for the rollers 4B of the intermediate row, a cemented steel or carburized steel can be employed as a material for the rollers 4A and 4C of the first and third rows.

With respect to the relation in length of the rollers 4A to 4C of the first to third rows, each of the lengths L_{A} and L_{C} of the rollers 4A and 4C of the first and third rows is preferably within the range of 1.1 to 3, more preferably within the range of 1.2 to 2 times the length L_{B} of the rollers 4B of the intermediate row. If each of the lengths L_{A} and L_{C} is smaller than the length that is 1.1 times the length L_{B}, the intended effects of the present invention cannot be obtained, but if each of the lengths L_{A} and L_{C} is greater than the length that is three times the length L_{B}, an excessive unbalance may undesirably occur in load bearing capacity between the rollers 4A of the first row and the rollers 4B of the intermediate row and between the rollers 4C of the third row and the rollers 4B of the intermediate row.

With the cylindrical roller bearing 1 of the structure described above, since the three rows of the rollers are employed in the cylindrical roller bearing 1, the lengths L_{A}, L_{B} and L_{C} are relatively small as compared with the cylindrical roller bearing of a type utilizing double rows of rollers. This is particularly true if the cylindrical roller bearing of the present invention, that is, the triple row cylindrical roller bearing is desired to be of a size similar to that of the double row cylindrical roller bearing. Accordingly, even though the moment load acts, the skew will hardly occur in the triple row cylindrical roller bearing 1. This leads to prevention of a frictional wear, which would otherwise be brought about by the skew, and, hence, to increase of the durability of the triple row cylindrical roller 1. Although the use of the relatively short rollers for each row may decrease the load bearing capacity exhibited by each of the first to third rows of the rollers 4A to 4C, since the length L_{A} of each roller of the first row and the length L_{C} of each roller of the third row are rendered greater than the length L_{B} of each roller of the intermediate row, the rollers 4A to 4C can have the respective lengths L_{A} and L_{C} slightly smaller than the length of each roller of the opposite rows in the double row cylindrical roller bearing and, therefore, each of the first and third rows of the rollers 4A and 4C can have a sufficient load bearing capacity even under a condition in which the load on each of the opposite ends of the roller bearing increases with the moment load. Considering that the load acting on the intermediate or second row of the rollers 4B is small, the intermediate row of the rollers 4B will not pose any problem associated with the load bearing capacity although the length L_{B} is shorter than the lengths L_{A} and L_{C}.

Also, since the cylindrical roller bearing 1 has the triple rows of the rollers 4A to 4C, as compared with the cylindrical roller bearing having four or more rows of the rollers, reduction of the total length (L_{A} + L_{B} + L_{C}) of the rollers 4A to 4C due to the presence of the gaps between the neighboring roller rows is minimal and, hence, it is possible to secure the load bearing capacity of the triple row cylindrical roller bearing 1 as a whole, which is comparable to the load bearing capacity afforded by the double row cylindrical roller bearing.

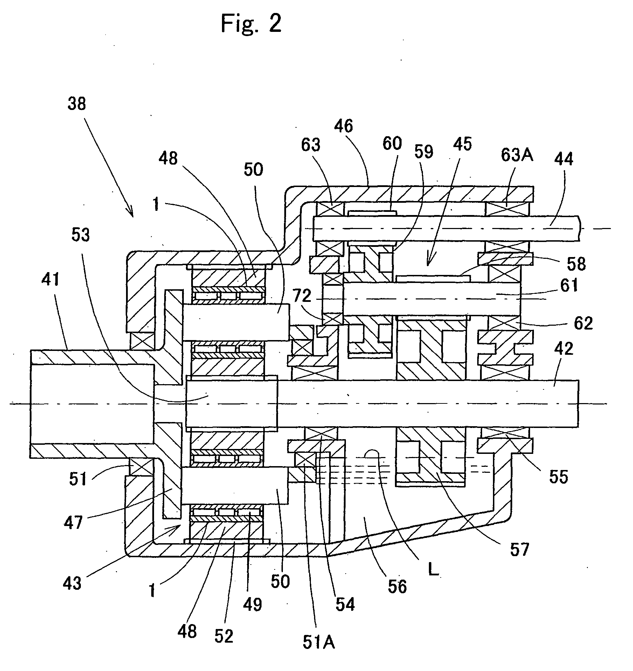

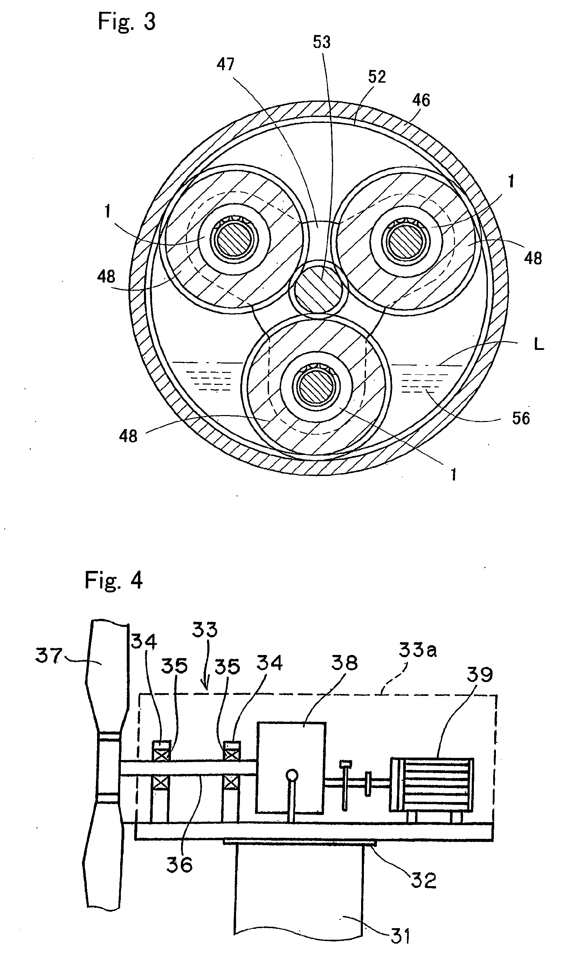

Figs. 2 and 3 illustrate one example of the application of the triple row cylindrical roller bearing 1 of the present invention to a planetary gear assembly employed in the speed increaser of the wind power generator. The speed increaser, identified by 38, includes a planetary gear assembly 43 for transmitting the drive of an input shaft 41 to a low speed shaft 42 after having increased the speed of rotation of the input shaft 41, and a secondary speed increaser 45 for increasing the speed of rotation of the low speed shaft 42 before transmitting the drive of the low speed shaft 42 to an output shaft 44. The planetary gear assembly 43 and the secondary speed increaser 45 are enclosed within a common casing 46. The input shaft 41 is coupled with a spindle of the windmill, whereas the output shaft 44 is drivingly coupled with the electric power generator.

The planetary gear assembly 43 includes a carrier 47 which forms an input unit of the planetary gear assembly 43 and which is rigidly connected, or otherwise formed integrally, with the input shaft 41 for rotation together therewith. The illustrated carrier 47 is of a generally Y-shaped configuration having three radially outwardly protruding, circumferentially equally spaced lobes each having a support shaft 50 so secured thereto or formed integrally therewith as to protrude in a direction perpendicular to the carrier 47. The carrier 47 is rotatably supported within the casing 46 by means of axially spaced apart bearings 51 and 51A. It is, however, to be noted that the carrier 47 may be not be always limited to the generally Y-shaped configuration, but may be in the form of a disc and that the number of the support shafts 50 and, hence, the number of planetary gears 48 as will be described later, may be one, two or more than three although the three support shaft 50 are shown.

The planetary gear assembly 43 in the illustrated embodiment also includes a planetary gear 48 mounted rotatably on each of the support shafts 50 through the corresponding cylindrical roller bearing 1. The planetary gears 48 are drivingly meshed with a ring gear 52, which is an internally threaded sun gear and which is provided in the casing 46, and also meshed with an externally threaded sun gear 53 fixedly mounted on the low speed shaft 42 in coaxial relation with the ring gear 52. The ring gear 52 serves as a stationary sun gear and may be either formed directly in the casing 46 or rigidly secured to the casing 46. The externally threaded sun gear 53 serves as a component part that defines an output unit of the planetary gear assembly 43. The low speed shaft 42, which is rotatably supported by the casing 46 through axially spaced apart bearings 54 and 55.

The secondary speed increaser 45 is comprised of a train of gears. In the illustrated embodiment, the secondary speed increaser 45 includes a gear 57 fixedly mounted on the low speed shaft 42 and meshed with a small diameter gear 58 that is fixedly mounted on an intermediate shaft 61. The secondary speed increaser 45 also includes a large diameter gear 59 mounted on the intermediate shaft 61 and meshed with a gear 60 that is fixedly mounted on the output shaft 44. The intermediate and output shafts 61 and 44 are rotatably supported by the casing 46 by means of axially spaced apart bearings 62 and 72 and similarly axially spaced apart bearings 63 and 63A, respectively.

A bottom region of the interior of the casing 46 defines an oil bath 56 accommodating therein a quantity of lubricant oil to a surface level L. The surface level L is high enough to allow the cylindrical roller bearings 1, then supporting the respective planetary gears 48, to be successively soaked into the lubricant oil during the rotation of the carrier 47.

The operation of the speed increaser 38 will now be described. Assuming that the input shaft 41 rotates in one direction about its axis, the carrier 47 rigid or integral with the input shaft 41 rotates about the axis of the input shaft 41, causing the planetary gears 48 to undergo a revolution around the sun gear 53. Since the planetary gears 48 are also meshed with the stationary ring gear 52, the planetary gears 48 then revolving about the sun gear 53 rotate about its own axis. The sun gear 53 is engaged with the planetary gears 48 then revolving around the sun gear 53 and rotating about its own axis and, therefore, the sun gear 53 and, hence, the low speed shaft 42 is driven at a speed higher than that of the input shaft 41.

Considering that the sun gear 53 serving as the output unit of the planetary gear assembly 43 is mounted on the low speed shaft 42 forming a part of the secondary speed increaser 45, rotation of the sun gear 53 can be transmitted to the output shaft 44 to drive the latter at a speed increased by the secondary speed increaser 45. In this way, rotation of the windmill spindle inputted to the input shaft 41 can, after the speed of rotation thereof has been increased successively by the planetary gear assembly 43 and the secondary speed increaser 45, be transmitted to the output shaft 44. Accordingly, even when the windmill rotates at a considerably low speed depending on the wind velocity, the speed increaser 38 is effective to provide a high speed rotation required for the electric power generator to achieve an electric power generation.

In the planetary gear assembly 43, the planetary gears 48 undergo the revolution about the sun gear 53 in engagement with the sun gears 52, 53. Accordingly, the moment load acts on the cylindrical roller bearings 1 then supporting the respective planetary gears 48 and a relatively large additional load acts on the roller bearing 1 for the transmission of the drive force. Because of this, the effect of the cylindrical roller bearing 1, that is, such effects that the skew will hardly occur in the triple row cylindrical roller bearing 1 even though the moment load acts on the roller bearing 1 and that the load bearing capacity of each of the rollers 4A and 4C of the first and third rows can be secured to allow the triple row cylindrical roller 1 as a whole to exhibit a sufficient load bearing capacity, can advantageously be exhibited.

Also, considering that the wind power generator is generally installed at a nonresidential region and/or at an upland region, the speed increaser 38 is consequently placed in a difficult condition for regular maintenance. Accordingly, the need is generally arisen to render the wind power generator including the speed increaser 38 to be maintenance-free for a substantial length of time. In this respect, the cylindrical roller bearing 1 according to the present invention, which is utilized to support the planetary gear 48 and has an excellent durability, is believed to meet with this need hitherto recognized.

Fig. 4 illustrates schematically the structure of the wind power generator equipped with the speed increaser 38 hereinabove described with particular reference to Figs. 2 and 3. A nacelle 33 is mounted on a support tower 31 through a swiveling bearing 32 so that the nacelle 33 can turn in all directions in a substantially horizontal plane about the axis of the support tower 31. Within the nacelle 33, a main shaft 36 having a windmill 37 fixedly mounted on one end thereof is rotatably supported through axially spaced apart main shaft bearings 35 encased within respective bearing housings 34. The other end of the main shaft 36 remote from the windmill 37 is drivingly coupled with the speed increaser 38, which is in turn drivingly coupled through the output shaft 44 with a rotor shaft of the electric power generator 39. The speed increaser 38 shown in Fig. 4 is identical with that shown in and described with reference to Figs. 2 and 3.

Fig. 5 illustrates a multi-row cylindrical roller bearing suggested for the purpose of reference. This suggested cylindrical bearing 1A includes four rows of rollers 4. The rollers 4 of the rightmost and leftmost rows, which are positioned adjacent the opposite ends of the bearing 1A, have a length greater than those of the two intermediate rows.

Other structural features of the multi-row cylindrical roller bearing 1A than those described above are substantially similar to those of the triple row cylindrical roller bearing 1 shown in and described with reference to Fig. 1 and, therefore, the details thereof are not reiterated for the sake of brevity, noting that like parts shown in Fig. 5 are shown by like reference numerals used in Fig. 1.

Although the suggested multi-row cylindrical roller bearing 1A appears to be disadvantageous in terms of easiness to construct and the total length of the rollers as compared with the triplet row cylindrical roller bearing 1 of the present invention, with the suggested multi-row cylindrical roller bearing 1A it is also possible to secure the load bearing capacity of the rightmost and leftmost rows of the rollers 4 while the skew relative to the moment load can effectively be avoided.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. By way of example, although in describing the foregoing embodiment, the triple row cylindrical roller bearing 1 of the present invention has been shown and described as applied to the planetary gear assembly 43 forming a part of the speed increaser 38, the triple row cylindrical roller bearing 1 of the present invention can be equally employed in a planetary gear assembly (not shown) that is utilized as a speed reducer.

Also, the planetary gear assembly to which the triplet row cylindrical roller bearing 1 of the present invention is applied may not always have both the internally and externally threaded sun gears 52 and 53, but may have either the internally threaded sun gear 52 or the externally threaded sun gear 53.

Accordingly, such changes and modifications are, unless they depart from the scope of the present invention as delivered from the claims annexed hereto, to be construed as included therein.

## Claims

1. A triple row cylindrical roller bearing, which comprises:
an inner race;
an outer race enclosing the inner race, with an annular bearing space delimited between it and the inner race; and
first, second and third rows of rollers accommodated within the annular bearing space, the second row of the rollers being positioned between the first and third rows of the rollers;
wherein each of the rollers of the first and third rows has a length greater than that of each of the rollers of the second row.

2. The triple row cylindrical roller bearing as claimed in Claim 1, wherein the rollers of the first and third rows have respective lengths which are within the range of 1.1 to 3 times the length of the rollers of the second row.

3. The triple row cylindrical roller bearing as claimed in Claim 2, wherein the respective lengths of the rollers of the first and third rows are within the range of 1.2 to 2 times the length of the rollers of the second row.

4. The triple row cylindrical roller bearing as claimed in Claim 1, wherein the rollers of the first and third rows have respective lengths which are equal to each other.

5. A planetary gear assembly which comprises:
an internally or externally threaded sun gear;
a carrier provided rotatably in coaxial relation with the sun gear and having at least one support shaft; and
at least one planetary gear rotatably mounted on the corresponding support shaft through a bearing and meshed with the sun gear;
wherein the bearing is the triple row cylindrical roller bearing of Claim 1.

6. The planetary gear assembly as claimed in Claim 5, wherein the planetary gear assembly forms a part of, or the entirety of, a speed increaser employed in a wind power generator for transmitting rotation of a windmill to an electric power generator after the speed of rotation of the windmill has been increased.
